# EUROPEAN PATENT APPLICATION

(11) **EP 4 141 166 A1**
(43) Date of publication of application: **01.03.2023**
(21) Application number: 21208098.0
(22) Date of filing: 12.11.2021
(51) Int. Cl.: D06M 11/00, D06M 23/12, B01J 13/02

(54) **FUNCTIONAL MICROCAPSULE CONTAINING GERMANIUM PARTICLES AND FUNCTIONAL TEXTILE FABRIC CONTAINING FUNCTIONAL MICROCAPSULES**

(30) Priority: 26.08.2021 KR 20210112817
(71) Applicant: Lashevan Korea Co., Ltd, Changwon-si, Gyeongsangnam-do 51402 (KR)
(72) Inventor: YANG, See-Young, 10450 Goyang-si, Gyeonggi-do (KR)
(74) Representative: Cabinet Chaillot

(57) **Abstract**

Proposed are a functional microcapsule processed to contain therein a germanium component having various physiologically active characteristics and a functional textile fabric to which the functional microcapsules are applied. The functional microcapsule includes a lipophilic oil, germanium ore powder or germanium oxide powder dispersed in the oil, and a shell made of a polymer material and containing therein the oil in which the germanium ore powder or germanium oxide powder is dispersed. These proposals may solve the problem of poor resistance to washing and poor washing durability, which have been pointed out as problems with conventional use of germanium, and may facilitate attachment and fixing of germanium to various media.

## Description

### CROSS REFERENCE TO RELATED APPLICATION

The present application claims priority to Korean Patent Application No. 10-2021-0112817, filed on August 26, 2021, the entire contents of which is incorporated herein for all purposes by this reference.

### BACKGROUND OF THE INVENTION

### 1. Field of the Invention

The present invention relates to functional microcapsules processed to contain therein a germanium component having various physiologically active characteristics and to a functional textile fabric to which the functional microcapsules are applied.

### 2. Description of the Related Art

Germanium is mainly found in the soil and is also contained in plants and mineral water. Germanium is unique in that it has health benefits for the human body, such as increasing the oxygen supply in the body, strengthening the immune system, promoting production of endorphins, and eliminating pain. It is known that various kinds of benefits can be achieved merely through consumption of germanium.

Fundamental mechanisms through which germanium works include (1) oxygen enrichment, (2) removal of toxins, (3) removal of free radicals, and (4) increasing the level of glutathione. These four mechanisms first activate the immune system, and the activated immune system serves as a basis for benefits in various areas.

As described above, germanium is very useful and has significant beneficial functions. Germanium is mainly used after grinding or processing germanium ore collected from nature or as germanium oxide separated and extracted from germanium ore.

The actual content of germanium in germanium ore is extremely small. When the ore itself is processed and used, the ore may be attached to various portable items (including accessories such as necklaces, bracelets, rings, and the like) and bedding, which have a medical purpose.

However, when high-purity germanium is used in various media, in particular, there may be problems related to water fastness, resistance to washing, or the like.

That is, high-purity germanium is used in the form of germanium oxide (germanium dioxide) and processing such high-purity germanium oxide to be attached to various media, including textiles, essentially requires water resistance. In particular, water resistance and resistance to washing serve as very important criteria for evaluating physical characteristics when it comes to processing of textiles, clothing, fabric, and the like.

However, various types of textile fabric and clothing processed with germanium oxide show very poor resistance to washing. This is because germanium oxide is soluble in water at a low concentration. The solubility of germanium oxide in water is about 0.4%-0.5% at room temperature (25°C) and about 1%-1.1% at a high temperature of 100°C.

Processing of textile fabric is usually carried out at a concentration of several ppm to several hundred ppm. When the textile fabric is treated with such low concentrations of germanium oxide, the germanium oxide becomes dissolved in water and lost during a washing process such as laundering. For this reason, there is a problem of poor washing fastness of textiles treated with germanium oxide and there are limitations to using germanium oxide in textile fabric.

Most fabrics that are treated with germanium and are currently on the market have this problem. Of course, when the germanium ore is processed into small pieces and attached to the fabric, it has long-term sustainability with respect to such solubility in water. However, in this case, there are limitations and restrictions on processing. That is, there currently are many restrictions in processing germanium-containing fabric, in which germanium is evenly applied to soft and flexible fabric.

[Document of Related Art] Korean Patent No. 10-1925995 (December 6, 2018)

### SUMMARY OF THE INVENTION

The objective of the present invention is to solve problems of poor resistance to washing and poor washing durability, which have been pointed out as problems with conventional use of germanium, and to provide a germanium-containing functional microcapsule, which facilitates attachment and fixing of germanium to various media, and a functional textile fabric including the functional microcapsules.

The present invention proposes a method of dispersing and processing germanium oxide in various functional oils and then microencapsulating the germanium oxide to enable attachment to various media. This may solve the problems of poor resistance to washing and poor water resistance exhibited by conventional germanium oxide-treated products when applying germanium oxide to fabric, clothing, and the like in particular. In addition, a complex synergistic effect due to intrinsic properties of the functional oils used as dispersion media of germanium oxide may also be expected.

The germanium used in the present invention may be powder of pure germanium ore or high-purity germanium oxide (germanium dioxide).

The functional oil used as a dispersion medium for dispersing germanium may be various types of oil. For example, various oils such as phytoncide oil, which is often used for purposes related to physiological activity; fragrance oils such as hinoki oil; MCT oil; coconut oil; olive oil; and the like may be used. Oils used as the dispersion medium are not limited to the above oils and may be selectively used in various ways. For reference, "MCT" in MCT oil stands for medium-chain triglycerides. Nowadays, MCT oil is used widely as a health supplement or a beauty oil.

In the present invention, microcapsule processing of germanium dispersed into particles in various functional oils is performed using a microencapsulation process. The size of the microcapsule may be selectively adjusted according to an intended use and purpose. That is, in relation to a textile, the size of the microcapsule may be determined by considering the textile's raised state, thickness, and surface hardness; the degree of sustained release of the functional oil used together; and the like.

In addition, according to the present invention, a material of the shell of the microcapsule may be selected from various materials and processed. Most basically, microcapsules made of materials mainly containing melamine, melamine-formaldehyde, or urea polymer, or microcapsules with biodegradable properties using materials such as polylactic acid (PLA), polycaprolactone (PCL), or gelatin may be used.

On the other hand, according to the present invention, MCT oil used with germanium may be used with other functional oils to act as a dispersant for fine dispersion of germanium in an oil solvent. However, when dispersion performance falls shorts of a desired particle size depending on the characteristics of the functional oil solvent used, a dispersant for a solvent may be used together.

On the basis of the features described above, the present invention provides a functional microcapsule including a lipophilic oil, particles of germanium ore powder or germanium oxide powder dispersed in the oil, and a shell made of a polymer material and containing therein the oil in which the germanium ore powder or germanium oxide powder is dispersed.

The shell of the microcapsule may be made of any one material selected from the group consisting of melamine, melamine-urea-formalin (MUF), melamine-formaldehyde (MF), and urea-formalin (UF).

Alternatively, the shell of the microcapsule may be made of a biodegradable polymer material. The biodegradable polymer may be PLA or PCL, and the oil may be a functional oil.

In addition, the present invention provides a functional textile fabric, to which the functional microcapsules as described above are attached using a binder.

The size of the microcapsule may be in a range of 10-20 µm, and the size of the germanium ore powder or germanium oxide powder is preferably 1 µm or less.

The textile fabric may be made of a mixed yarn containing 94% Lyocell and 6% polyurethane.

As described above, according to the present invention, germanium oxide is dispersed as particles in various functional oils, and then, the oil containing dispersed germanium is microencapsulated. Since germanium is isolated from external moisture as a result, the problem of solubility in water may be solved.

That is, when germanium oxide dispersed in the functional oil inside the microcapsule is attached to a textile, the germanium particles dispersed in the oil inside the microcapsule are not directly exposed to water during washing. The germanium particles may be even further stabilized due to repulsion from water that may be attributable to lipophilicity of the shell of the capsule and the oil inside, thereby having excellent water fastness.

In addition, when the oil used together with the dispersed germanium particles inside the capsule is selectively used, a complex synergistic effect may be expected according to the intrinsic properties of the functional oil inside the microcapsule.

In addition, the functional microcapsule containing the germanium oxide particles according to the present invention may be attached and applied to various types of media in addition to being attached to a functional textile fabric and being applied to clothing.

### BRIEF DESCRIPTION OF THE DRAWINGS

The above and other objectives, features, and other advantages of the present invention will be more clearly understood from the following detailed description taken in conjunction with the accompanying drawings, in which:
FIG. 1 is a schematic diagram of a functional microcapsule containing germanium oxide particles according to an example of the present invention;
FIG. 2 is a manufacturing process diagram of a functional microcapsule containing germanium oxide particles according to an example of the present invention; and
FIG. 3 is a graph showing the distribution of the sizes of dispersed germanium oxide particles applied to an example of the present invention.

### DESCRIPTION OF THE PREFERRED EMBODIMENTS

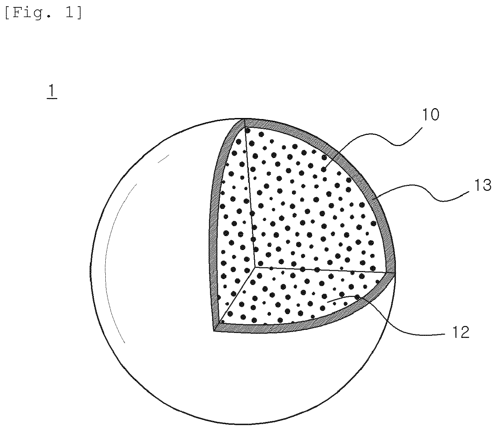

A functional microcapsule 1 containing germanium oxide particles according to an example of the present invention has a structure in which germanium oxide particles 10 dispersed in oil 12 is contained inside the shell of the microcapsule 13 along with the oil 12 and therefore is blocked from the outside as shown in FIG. 1.

The shell of the microcapsule 13 may be of a polymer material, particularly a material mainly containing melamine, melamine-formaldehyde, or urea polymer.

Alternatively, the shell of the microcapsule 13 may be made of a biodegradable polymer that is eco-friendly and human-friendly by being hypoallergenic. Examples of the above include PLA, PCL, and gelatin. PLA is an eco-friendly biodegradable resin extracted from corn and is a safe polymer material that does not contain environmental hormones or heavy metals. In addition, PLA is an eco-friendly polymer material that is 100% biodegradable in nature when released into the soil. Along with PLA, PLGA, and the like, PCL is also an eco-friendly biodegradable polymer that is widely used. Preparation of microcapsules with the biodegradable polymer may be done using a solvent evaporation method.

The oil 12 for dispersing germanium oxide may be selected from various and wide-ranging choices. A wide variety of lipophilic substances such as fragrance oils, organic oils, various solvents, natural products (for example, phytoncide), mineral oil, and the like may be selected and used. For example, various oils such as phytoncide oil, which is often used for purposes related to physiological activity; fragrance oils such as hinoki oil; MCT oil; coconut oil; olive oil; and the like may be used. For reference, "MCT" in MCT oil stands for medium-chain triglycerides, and nowadays, MCT oil is used widely as a health supplement or a beauty oil.

In order to disperse germanium oxide into particles in such lipophilic oil, it is preferable to disperse germanium oxide into particles in the oil itself as a simplest method. When dispersion of particles is difficult due to characteristics of an oil that has been chosen, a dispersant may be used with the oil.

In particular, the oil 12 may pass through the shell of the microcapsule 13 as molecular units in the liquid phase or by vaporization, thereby exhibiting a sustained release property. Accordingly, the oil 12 may be composed of a functional oil to utilize this sustained release property. For example, when using a phytoncide oil, in addition to the effects of germanium as a basis, phytoncide's intrinsic aromatherapy, deodorant, and antibacterial functions may be expressed as well. Other various functional oils including wasabi oil may be used to utilize the intrinsic functions of the oils.

Germanium particles dispersed in the oil 12 may be applied in the form of high-purity germanium oxide 10, that is, germanium dioxide, or alternatively, in the form of particles of pure germanium ore powder.

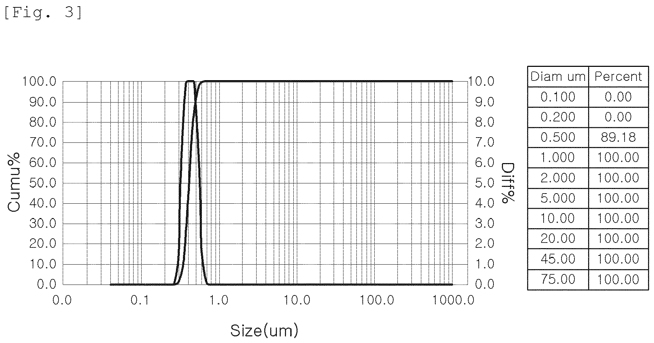

As shown in FIG. 3, particles of the germanium oxide 10 may be dispersed 100% by the oil 12 when the size of the particles of the germanium oxide 10, that is, the particle size, is within 1.0 µm. Therefore, it is sufficient to form a particle size for dispersion within that range.

The size of the functional microcapsule 1 is preferably set in a range of 10-20 µm. When the size of the capsule is large, the capsule may easily burst from external impact and be easily removed from the textile during washing, which would reduce the washing fastness. According to an experiment, a capsule size in a range of 10 to 15 µm was sufficient to accommodate the germanium oxide 10 having a particle size of less than 1.0 µm as described above.

In the configuration described above, the germanium oxide 10 dispersed and distributed in the oil 12 may be maintained in an undissolved state in the oil 12. In addition, since a state of the germanium oxide 10 being blocked from the outside by the shell of microcapsule 13 is maintained, the problem of solubility in water may be solved.

### [Example of Manufacturing Method]

### 1. Germanium Particles

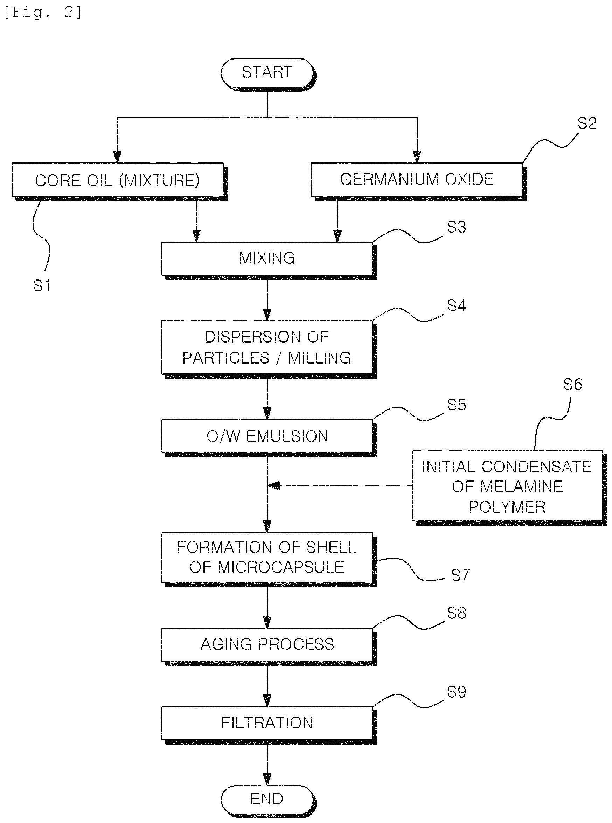

Ordinarily, germanium with a purity of 99% or higher is used. Germanium oxide (GeO₂) with a purity of 99.999%, which is available from Germanium Corporation of the United States, was used (S2 in FIG. 2).

### 2. Dispersion Processing

First, 500 g of phytoncide oil and 300 g of MCT oil were mixed (S1). After adding 200 g of germanium oxide powder to the mixed oil, the mixture was sufficiently stirred at a speed within 300 rpm (S3) .

The mixed germanium dispersion was transferred to a high-speed dispersion machine and dispersed for more than 10 hours until a desired particle size was reached. When the desired particle size (D₉₀: 2 µm) was reached, the dispersion was further dispersed for at least 3 hours in consideration of adsorption and stability at the particle size, and then dispersion was completed (S4).

The dispersion machine used in this step may be a Netzsch mill or a Dyno mill. As the dispersion beads, zirconium beads with a diameter of 0.3 mm were used. A dispersion machine other than the ones mentioned above may be selected and used.

During the dispersion as described above, MCT oil may act both as a dispersion medium and a dispersant. However, an additional dispersant may be used when smaller particles are desired or when dispersion stability after dispersion is required. The amount of dispersant used is preferably within a range of about 10 wt% of the amount of germanium oxide used.

### 3. Preparation of M-F Type Microcapsules

### 3-1. Process of Preparing Emulsifier

50 g of Scripset 520 (available from Solenis) was dispersed in 950 g of water. 6.5 g of caustic soda was added to the dispersion and gradually heated to 90°C. Then, the temperature was maintained for about 30 minutes to completely dissolve the caustic soda. The dissolved solution was cooled, filtered using a 200 mesh filter, and stored at room temperature.

### 3-2. Emulsification Process

550 g of the emulsifier solution prepared above was added to a 2 L beaker. Using a high-speed homogenizing mixer, the contents of the beaker were mixed while maintaining a stirring speed of about 800 rpm.

200 g of the germanium oxide dispersion solution prepared in step 2 above was gradually added to the beaker. After the addition was completed, the stirring speed of the homogenizing mixer was increased to 4000-7000 rpm to proceed with emulsification S5. A microscope, a paper test, or the like was used to confirm whether sufficient and stable emulsification had been achieved.

### 3-3a. Composition and Preparation of Initial Condensate of Melamine-Urea Polymer

130 g of water was added to a 500 ml beaker. The initial pH was adjusted to about 8-10 using a 1% caustic soda solution. 50 g of 35% formalin, 70 g of melamine powder, and 7 g of urea were added to the beaker. The temperature was raised gradually while thoroughly stirring the mixture. The mixture was heated for about 10 to 15 minutes while stirring until the temperature reached about 60°C. The mixture was continuously stirred while maintaining a temperature range of 60°C-65°C S6.

### 3-3b. Composition and Preparation of Initial Condensate of Urea Polymer

130 g of water was added to a 500 ml beaker. The initial pH was adjusted to about 8-10 using a 1% caustic soda solution. 30 g of 35% formalin and 60 g of urea were added to the beaker. The temperature was raised gradually while thoroughly stirring the mixture. The mixture was heated for about 10 to 15 minutes while stirring until the temperature reached about 60°C. The mixture was continuously stirred while maintaining a temperature range of 60°C-65°C.

### 3-4. Microencapsulation

The initial condensate of melamine-urea polymer prepared in step 3-3a or the initial condensate of urea polymer prepared in step 3-3b was added to the homogenizing mixer of the germanium oxide dispersion solution prepared in step 3-2. Then, the temperature is raised to 75°C within 30 minutes while maintaining a stirring speed of at least 5000 rpm.

Paying attention to an increase in viscosity with the progress of the reaction, the mixture was maintained in a sufficiently stirred state. After about 1 hour, the homogenizing mixer was removed. Then, an ordinary stirrer was used to continue stirring the mixture while maintaining the temperature and a stirring speed of 500-1000 rpm for 5 hours or more S7.

Then, the heating was stopped, and 30 g of a 5% citric acid solution was gradually added. The mixture was continuously stirred until the mixture was cooled to room temperature S8. Water was added to the mixture to adjust the total weight to 1000 g.

After sufficient cooling, the mixture was filtered through a 100 mesh net before use to remove particles of granules generated during the reaction S9.

### 4. Preparation of Biodegradable Polymer Microcapsules

### 4-1. Preparation of PLA Solution

30 g of PLA was dissolved in 470 g of methylene chloride solvent. First, 470 g of methylene chloride solvent was added to a prepared glass bottle, and after adding 30 g of PLA to the bottle, the opening of the bottle was sealed. The bottle was rotated using a ball mill for 24 hours to dissolve the PLA.

### 4-2. Preparation of Capsules with PLA Shell

350 g of the emulsifier prepared in step 3-1 was mixed with 550 g of water. Then, 2 g of sodium dodecyl sulfate (SDS) was dissolved in the mixture. The mixture was stirred while maintaining a stirring speed of 300-500 rpm. 100 g of the oil in which germanium oxide was dispersed in step 2 above (germanium oxide-dispersed oil) was gradually added to the mixture using a syringe. After adding the oil, a stirring speed of about 1000-1500 rpm was maintained.

When the added germanium oxide-dispersed oil became stabilized, 300 g of the PLA solution prepared in step 4-1 was gradually added to the emulsified solution using a metering pump. The speed of adding the PLA solution was about 5-7 g/min. When adding the PLA solution, the temperature of the emulsified solution was kept at or below 25°C. After the addition of the PLA solution was completed, the temperature was raised gradually. The temperature was raised very slowly at a rate of 0.5°C/min. When the temperature reached about 35°C, the emulsified solution was stirred while maintaining this state for about 5 hours or more. Then, the temperature was gradually raised again to 45°C, and the emulsified solution was stirred for 3 hours or more. Finally, the weight of the reaction solution should be about 1000 g. The final mass of the reaction solution may be adjusted by stirring for longer or adding water.

The reaction solution was filtered through a 100 mesh net before use.

### 4-3. Preparation of Capsules with PCL Shell

The process is identical to the processes for capsules with a PLA shell described in steps 4-1 and 4-2 except that the shell material is changed to PCL.

### 5. Processing of Functional Textile Fabric

### 5-1. Preparation of Composition for Processing Textile

A composition for processing textile was prepared using the germanium oxide-containing microcapsules prepared in step 3 or 4. According to the type of the prepared microcapsule, the microcapsules are mixed with an aqueous acrylic binder and water in the ratios shown in [Table 1] below.

**[Table 1]**

| | Untreated pure germanium powder | Slurry for processing MUF capsules | Slurry for processing UF capsules | Slurry for processing PLA capsules | Slurry for processing PCL capsules |
|---|---|---|---|---|---|
| Amount used | 10 g | 250 g | 250 g | 500 g | 500 g |
| Aqueous acrylic binder | 390 g | 250 g | 250 g | 250 g | 250 g |
| Water | 600 g | 500 g | 500 g | 250 g | 250 g |
| Total | 1000 g | 1000 g | 1000 g | 1000 g | 1000 g |

The aqueous acrylic binder used in [Table 1] may be an aqueous emulsion binder. In this example, Binder AR, which is available from Hansong Corp., was used. Various other types of commercially available aqueous binders such as Binder AR-250, AR-820S, and HanBinder NF-300 may be selected and used according to the textile fabric and the purpose.

### 5-2. Attachment to Textile Fabric

The fabric used is made of a mixed fiber containing 94% Lyocell and 6% polyurethane. In the case of such mixed fibers, there is poor attachment of particles to the fibers during aqueous processing. Therefore, conducting experiments on the mixed fibers to measure and compare pre- and post-washing fastness may be very useful in understanding the effectiveness of attachment. That is, when resistance to washing in relation to the mixed yarn of the above composition is excellent, it can be expected that washing durability would be even better in relation to other fibers.

A deposition method was used for attachment of microcapsules to the fiber, and the microcapsules were attached to the textile fabric using a mangle machine for compression.

Thereafter, the textile with microcapsules attached was dried in a drying chamber at 150°C or less to complete the process.

An appearance of the germanium oxide-containing microcapsules attached to the textile fabric is similar to that disclosed in Korean Patent No. 10-1925995, which is a document of the related art stated in "Background of the Invention" (refer to FIG. 5 on page 11 of the registered patent publication).

Table 2 below shows a comparison of washing fastness after germanium oxide was initially dispersed into particles in functional oil, microcapsules were processed using the functional oil, and the microcapsules were processed onto textile fabric, or after unprocessed germanium oxide powder was directly processed onto textile fabric using the same processing method as above. The concentration of residual germanium attached to the textile was measured using ICP-EOS.

**[Table 2]**

| | Treatment without processing of capsules | Treatment after processing of MUF capsules | Treatment after processing of UF capsules | Treatment after processing of PLA capsules | Treatment after processing of PCL capsules |
|---|---|---|---|---|---|
| Initial concentration of germanium | 258 ppm | 255 ppm | 248 ppm | 265 ppm | 268 ppm |
| After washing once | 58 | 224 ppm | 215 ppm | 198 ppm | 193 ppm |
| After washing 5 times | x | 198 ppm | 168 ppm | 135 ppm | 125 ppm |
| After washing 15 times | x | 134 ppm | 122 ppm | 98 ppm | 95 ppm |

| | | | | | |
|---|---|---|---|---|---|
| 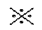 Components of textile fabric: 94% Lyocell, 6% polyurethane 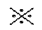 Washing fastness tests were performed by machine washing (30°C) and flat drying according to KS K ISO 6330:2012. | | | | | |

Referring to [Table 2] above, the washing resistance of fabric which was processed with microcapsules whose shell was made of a melamine-urea-formalin material (MUF type) was the best. The results of urea-formalin (UF) type are thought to be attributable to the urea-formalin polymer's characteristic of having a somewhat weak water resistance.

When PLA and PCL were used as shell materials and processed for biodegradable microcapsules, the washing resistance was somewhat lower than that of the MUF type and UF type. This appears to be a result of attachment of PLA and PCL polymers to textile being weaker than attachment of MUF and UF to textile fibers.

As shown in [Table 2], up to the initial 5 times of washing in the washing resistance test, granules of capsule particles or the capsule particles in an incompletely attached state fell off and the concentration of residual germanium decreased easily. However, the capsule particles firmly attached thereafter continue to remain on the textile fabric and maintain their function.

On the other hand, when the germanium oxide particles that were not processed into microcapsules were processed onto the textile fabric as they were, the concentration of residual germanium dropped drastically during washing. This seems to be attributable not only to the simple problem of attachment of germanium oxide particles to fibers but also to germanium oxide being dissolved and lost due to germanium oxide's solubility in water. Therefore, to solve such problem with a physical property (solubility) of germanium oxide, in the present invention, germanium oxide was initially dispersed into particles in a lipophilic environment such as oil, fine oil droplets were formed using this, and microencapsulation was performed, thereby giving germanium oxide a new physical property of having a two-fold protection.

That is, the fine germanium particles were initially protected from a hydrophilic environment due to the oil environment in which the particles were dispersed. Then, the shell of the fine oil droplets was once again processed with a polymer material, making it possible to keep the germanium oxide particles stable from the external environment.

On the other hand, since the functional microcapsules containing the germanium oxide particles and the functional fabric including the same described above are only examples provided to aid understanding of the present invention. Therefore, the scope of right or the technical scope of the present invention, which is defined by the claims described hereinbelow, is not to be limited by what has been described above.

## Claims

1. A functional microcapsule comprising:
a lipophilic oil,
particles of germanium ore powder or germanium oxide powder dispersed in the oil, and
a shell made of a polymer material and containing therein the oil in which the germanium ore powder or germanium oxide powder is dispersed.

2. The functional microcapsule of claim 1, wherein the shell of the microcapsule is made of any one material selected from the group consisting of melamine, melamine-urea-formalin (MUF), melamine-formaldehyde (MF), and urea-formalin (UF).

3. The functional microcapsule of claim 1, wherein the shell of the microcapsule is made of a biodegradable polymer material.

4. The functional microcapsule of claim 3, wherein the biodegradable polymer is polylactic acid (PLA) or polycaprolactone (PCL).

5. The functional microcapsule of claim 1, wherein the oil is a functional oil.

6. A functional textile fabric to which the functional microcapsules of claim 1 are attached via a binder.

7. The functional textile fabric of claim 6, wherein the microcapsule has a size in a range of 10-20 µm and the germanium ore powder or germanium oxide powder preferably has a size of 1 µm or less.

8. The functional textile fabric of claim 7, wherein the textile fabric comprises a mixed yarn containing 94% Lyocell and 6% polyurethane.
